# EUROPÄISCHE PATENTANMELDUNG

(11) **EP 4 001 050 A1**
(43) Veröffentlichungstag der Anmeldung: **25.05.2022**
(21) Anmeldenummer: 21205041.3
(22) Anmeldetag: 27.10.2021
(51) Int. Cl.: B62B 1/00, B62B 1/12, B62B 1/18, B62B 5/04, B62B 5/06

(54) **TRANSPORTGERÄT**

(30) Priorität: 16.11.2020 DE 202020106558 U
(71) Anmelder: Indorf Apparatebau GmbH, 29699 Bomlitz (DE)
(72) Erfinder: Wolf, Michael, 22880 Wedel (DE)
(74) Vertreter: Glück Kritzenberger Patentanwälte PartGmbB

(57) **Zusammenfassung**

Ein Transportgerät (1) zur Beförderung von Gegenständen (G), umfasst zumindest einen Transportbehälter (2), ein an dem Transportbehälter (2) zwischen einer Fahrposition (FP) und einer Standposition (SP) um eine erste Schwenkachse (SA1) verschwenkbar angeordnetes Fahrwerk (3) mit wenigstens zwei Laufrädern (4), wobei das Transportgerät (1) zumindest in der Fahrposition (FP) des Fahrwerks (3) auf einer Ebene (E) mittels der Laufräder (4) fahrbar abgestützt ist, während das Transportgerät (1) in der Standposition (SP) des Fahrwerks (3) auf der Ebene (E) zumindest abschnittweise aufliegt, wobei das verschwenkbare Fahrwerk (3) zur Einleitung der Schwenkbewegung um die erste Schwenkachse (SA1) über zumindest einen Stellhebel (5) mit einer um zumindest eine zweite Schwenkachse (SA2) schwenkbaren Hebelmechanik (6) zwangsgekoppelt ist, die zwischen einer ersten Position (P1) und einer zweiten Position (P2) um die zumindest eine zweite Schwenkachse (SA2) derart schwenkbar ausgebildet ist, dass die Hebelmechanik (6) in der ersten Position (P1) das Fahrwerk (3) in die Standposition (SP) und in der zweiten Position (P2) in die Fahrposition (FP) jeweils lagefixiert verschwenkt.

## Beschreibung

Die vorliegende Erfindung betrifft ein Transportgerät zur Beförderung von Gegenständen.

Dabei sind dem Fachmann aus dem Stand der Technik unterschiedlichste Transportgeräte zur Beförderung von Gegenständen bekannt. Beispielsweise kennt der Fachmann hierfür Schubkarren oder auch Transportkarren.

Derartige Transportgeräte bzw. Transportkarren sind zwei- oder mehrrädrige Wagen, die zum Transport von Gegenständen dienen. Als zweirädriger Transportkarren ist insbesondere die Sackkarre bekannt, die ein Grundgestell (Rahmen) aufweist, an dessen unterem Ende eine starre Radachse mit zwei Laufrädern und ein nach vorne ragender Träger, der gleichzeitig als Standfuss dient und meistens als Aufnahmeplatte ausgebildet ist, angeordnet sind.

Zur Aufnahme von Transportgütern wird der Träger unter das Transportgut geschoben, um anschließend zum Abheben des Transportgutes vom Boden die Sackkarre um die Laufräder zu verschwenken. Nachteilig ist dabei, dass je nach Gewicht des Transportgutes der Einsatz von erheblicher Muskelkraft erforderlich ist, um, z. B. durch zumindest einseitiges Anheben des Transportgutes den Träger unter das Transportgut zu schieben.

Eine Transportkarre mit einem Tragegestell, welches einen U-förmigen Rahmen aufweist, ist beispielsweise aus Druckschrift DE 90 02 279 U1 bekannt geworden. An den Enden eines zu einem U gebogenen Rohrs ist eine Schüppe angeordnet, die ein Lastaufnahmemittel ausbildet. Im Bereich der Enden der beiden U-Schenkel sind am Tragegestell Radträger befestigt, die jeweils ein Rad tragen. Die Radträger sind an Griffstangen befestigt, die an ihren freien Enden Griffhandhaben ausbilden, die von einer Gebrauchsstellung in eine Verwahrstellung verschwenkt werden können. Einhergehend mit diesem Verschwenken der Griffhandhaben werden auch die Radträger von einer Verwahrstellung in eine Gebrauchsstellung verschwenkt. Die Radträger werden in der Gebrauchsstellung bzw. in der Verwahrstellung jeweils über Fesselungsmittel am Gestell gefesselt, so dass sie sich nur willensbetont von der einen in die andere Stellung verschwenken lassen. Hierzu muss die gesamte Handgriffanordnung in Achsrichtung gegen die Rückstellkraft einer Rückstellfeder verlagert werden. Dabei werden Fesselungsmittel außer Eingriff gebracht, die ansonsten von der Rückstellfeder im Eingriff gehalten werden.

Ferner ist aus der Druckschrift GB 305,186 A eine Transportkarre zum Transportieren von Gütern offenbart, umfassend einen Transportbehälter (Bezugszeichen a), einen Hebel mit einem Griffabschnitt (Bezugszeichen e) sowie ein paar Räder (Bezugszeichen e', e'), wobei die beiden Räder mittels des Hebels gegenüber dem Transportbehälter verschwenkt werden können. In einem bevorzugten Ausführungsbeispiel wird der dem Griffabschnitt gegenüberliegenden Endabschnitt in einer Führungsnut (Bezugszeichen b) gehalten, wobei die Führungsnut in der jeweiligen Seitenwandung des Transportbehälters eingebracht ist.

Hingegen betrifft die weitere Druckschrift US 1,125,441 A1 ein zusammenklappbares Go-Cart, aufweisend ein Gehäuse mit hohlen Seitenwänden, einen ausziehbaren Handgriff, schwenkbar gelagerte Räder, ein Dach für das Go-Cart und Verbindungsmittel zur Herstellung einer Verbindung zwischen dem Dach und den Rädern. Durch die Bewegung des Dachs des Go-Carts bewegen sich die Räder aus der hohlen Seitenwand heraus oder in die hohle Seitenwand hinein. Als Verbindungsmittel zwischen dem Dach und den Rädern ist dabei eine Hebelmechanik vorgesehen.

Schließlich wird in der Druckschrift US4,269,096A ein mobiler Arbeitsplatz für Elektrowerkzeuge und dergleichen beschrieben, wobei der Arbeitsplatz ein Rahmengestell aufweist und von einer Standposition in eine Fahrposition umgebaut werden kann. Hierzu ist ein Rad vorgesehen, welches verschwenkbar an dem Rahmengestell befestigt ist und mittels einer Hebelmechanik von einer nicht-aktiven Position in eine aktive Position bewegt werden kann, wobei der Arbeitsplatz in der aktiven Position des Rades verfahrbar ist und der Arbeitsplatz in der nicht-aktiven Position des Rades nicht verfahrbar ist. Zum Betätigen der Hebelmechanik sind zwei Handgriffe vorgesehen, die schwenkbar an dem Rahmengestell befestigt sind.

Aufgabe der vorliegenden Erfindung ist es dabei, ein Transportgerät zur Beförderung von Gegenständen aufzuzeigen, das die Nachteile der aus dem Stand der Technik bekannten Transportgeräte überwindet und zudem konstruktiv einfach, robust sowie platzsparend aufgebaut ist.

Zur Lösung dieser Aufgabe ist ein Transportgerät entsprechend dem Patentanspruch 1 ausgebildet. Die Unteransprüche betreffen dabei besonders vorteilhafte Ausführungsvarianten der Erfindung.

Der wesentliche Aspekt der vorliegenden Erfindung ist darin zu sehen, ein Transportgerät zur Beförderung von Gegenständen aufzuzeigen, umfassend zumindest einen Transportbehälter zur Aufnahme der Gegenstände, ein an dem Transportbehälter zwischen einer Fahrposition und einer Standposition um eine erste Schwenkachse verschwenkbar angeordnetes Fahrwerk mit wenigstens zwei Laufrädern, wobei das Transportgerät zumindest in der Fahrposition des Fahrwerks auf einer Ebene mittels der Laufräder fahrbar abgestützt ist, während das Transportgerät in der Standposition des Fahrwerks auf der Ebene zumindest abschnittweise aufliegt, und zwar vorzugsweise mit dem Transportbehälter, wobei das verschwenkbare Fahrwerk zur Einleitung der Schwenkbewegung um die erste Schwenkachse über zumindest einen Stellhebel mit einer um zumindest eine zweite Schwenkachse schwenkbaren Hebelmechanik zwangsgekoppelt ist, die zwischen einer ersten Position und einer zweiten Position um die zumindest eine zweite Schwenkachse derart schwenkbar ausgebildet ist, dass die Hebelmechanik in der ersten Position das Fahrwerk in die Standposition und in der zweiten Position in die Fahrposition jeweils lagefixiert verschwenkt. Vorzugsweise liegt der Transportbehälter in der Standposition des Fahrwerks auf dem Transportbehälter auf. Damit wird ein Transportgerät geschaffen, das einfach und robust aufgebaut ist und zudem platzsparend gelagert werden kann, da mehrere solcher Transportgeräte in ihrer jeweiligen Standposition übereinander gestapelt werden können. Zudem handelt es sich bei dem Transportgerät um ein sehr universell, für die unterschiedlichsten Gegenstände zum Transport einsetzbares Gerät, das vom Einkauf in Supermärkten bis hin zu Forschungs- und Expeditionsreisen verwendet werden kann. Insbesondere eignet sich in diesem Zusammenhang ein Transportbehälter in Form eine Aluminiumkiste bzw. Aluminiumbox mit einem daran gelenkig angeordneten, klappbaren Deckel, der beispielsweise über einen Dichtungsring in seinem geschlossenen Zustand die Gegenstände vor äußeren Umwelteinflüssen in dem Transportbehälter geschützt aufbewahrt.

Gemäß einer vorteilhaften Ausführungsvariante kann dabei vorgesehen sein, dass der Transportbehälter gehäuseartig ausgebildet ist und einen Behälterboden, mehrere umlaufend angeordnete Behälterseitenwände und einen Deckel aufweist.

Gemäß einer weiteren vorteilhaften Ausführungsvariante kann dabei vorgesehen sein, dass der Transportbehälter wasserdicht oder spritzwassergeschützt ausgebildet ist.

Gemäß einer nochmals weiteren vorteilhaften Ausführungsvariante kann dabei vorgesehen sein, dass der Transportbehälter aus einem korrosionsbeständigen und/oder formstabilen Material, insbesondere Aluminium, verzinktem Blech oder einem Polymer, hergestellt ist.

Gemäß einer nochmals weiteren vorteilhaften Ausführungsvariante kann dabei vorgesehen sein, dass an dem Transportbehälter zumindest ein klappbarer Tragegriff angeordnet ist.

Gemäß einer nochmals weiteren vorteilhaften Ausführungsvariante kann dabei vorgesehen sein, dass an einer Unterseite des Behälterbodens zumindest ein den Transportbehälter abstützender Standfuß und/oder ein weiterer, klappbarer Standfuß vorgesehen sind. Der Standfuß kann als Teil oder Bestandteil des Transportbehälters ausgebildet sein.

Gemäß einer nochmals weiteren vorteilhaften Ausführungsvariante kann dabei vorgesehen sein, dass das Fahrwerk zumindest einen, vorzugsweise zwei Schwenkhebel aufweist, der im Wesentlichen Y-förmig ausgebildet ist und in seinen jeweiligen freien Randbereichen der entsprechenden Längserstreckung der Y-Form einen Anlenkungsabschnitt aufweist.

Gemäß einer nochmals weiteren vorteilhaften Ausführungsvariante kann dabei vorgesehen sein, dass die erste Schwenkachse drehbar an dem jeweiligen ersten Anlenkungsabschnitt des entsprechenden Schwenkhebels aufgenommen ist, während an dem jeweiligen zweiten Anlenkungsabschnitt jeweils ein Stellhebel drehbar angebunden ist.

Gemäß einer nochmals weiteren vorteilhaften Ausführungsvariante kann dabei vorgesehen sein, dass an dem jeweiligen dritten Anlenkungsabschnitt des entsprechenden Schwenkhebels die wenigstens zwei Laufräder des Fahrwerks um eine jeweilige Drehachse drehbar gelagert aufgenommen sind.

Gemäß einer nochmals weiteren vorteilhaften Ausführungsvariante kann dabei vorgesehen sein, dass die Laufräder an dem jeweiligen dritten Anlenkungsabschnitt zu dem ersten Anlenkungsabschnitt beabstandet vorgesehen sind, und zwar derart, dass die Drehachsen der Laufräder in der Fahrposition des Fahrwerks mittig oder näherungsweise mittig zwischen der als Rückwand ausgebildeten Behälterseitenwand und der als Vorderwand ausgebildeten Seitenwand vorgesehen sind.

Gemäß einer nochmals weiteren vorteilhaften Ausführungsvariante kann dabei vorgesehen sein, dass über den jeweiligen Schwenkhebel eine Einzelradaufhängung für die Laufräder des Fahrwerks ausgebildet ist.

Gemäß einer nochmals weiteren vorteilhaften Ausführungsvariante kann dabei vorgesehen sein, dass das Fahrwerk mittels des zumindest einen Stellhebels eine Federung für die Laufräder ausbildet, indem der Stellhebel zweiteilig ausgebildet ist und jeweils ein erstes mit der Hebelmechanik zwangsgekoppeltes Stellhebelelement sowie ein zu dem ersten Stellhebelelement entlang der Längsstreckung des Stellhebels verschiebbar ausgebildetes zweiten Stellhebelelement aufweist, das unter einer Federspannung verschiebbar an dem ersten Stellhebelelement angebunden ist. Die Federspannung kann dabei verstellbar ausgebildet sein. Beispielsweise kann hierfür die Vorspannung des Federelements veränderbar ausgebildet sein.

Gemäß einer nochmals weiteren vorteilhaften Ausführungsvariante kann dabei vorgesehen sein, dass die Hebelmechanik eine Deichsel für das Transportgerät ausbildet, die ein Griffelement aufweist, an dem das Transportgerät bewegt, insbesondere geschoben und/oder gezogen, werden kann.

Gemäß einer nochmals weiteren vorteilhaften Ausführungsvariante kann dabei vorgesehen sein, dass das Fahrwerk und/oder die Hebelmechanik spiegelsymmetrisch zu einer Mittelebene ausgebildet sind und jeweils einen rechten Fahrwerkteil bzw. Hebelmechanikteil und/oder einen linken Fahrwerkteil bzw. Hebelmechanikteil aufweisen.

Gemäß einer nochmals weiteren vorteilhaften Ausführungsvariante kann dabei vorgesehen sein, dass die Hebelmechanik zumindest ein an dem Transportbehälter fest angeordnetes Befestigungselement, ein erstes Stellelement, ein zweites, sowie ein drittes Stellelement aufweist, wobei an dem Befestigungselement das erste Stellelement mit einem ersten Endbereich um die zweite Schwenkachse drehbar angelenkt angeordnet ist, wobei an dem ersten Stellelement zudem der Stellhebel gelenkig vorgesehen ist und an dem ersten Stellelement an dem der zweiten Schwenkachse gegenüberliegenden zweiten Endbereich eine dritte Schwenkachse ausgebildet ist, an der das zweite Stellelement um eine dritte Schwenkachse drehbar angeordnet ist.

Gemäß einer nochmals weiteren vorteilhaften Ausführungsvariante kann dabei vorgesehen sein, dass oberhalb des ersten Stellelementes und zu diesem beabstandet das dritte Stellelement an dem Befestigungselement um eine vierte Schenkachse drehbar mit einem ersten Bereich angeordnet ist, während der dem ersten Endbereich gegenüberliegende zweite Endbereich um eine fünfte Schwenkachse drehbar an dem zweiten Stellelement angeordnet ist.

Gemäß einer nochmals weiteren vorteilhaften Ausführungsvariante kann dabei vorgesehen sein, dass das erste Stellelement und dritte Stellelement untereinander parallelogrammförmig an dem Befestigungselement bzw. dem zweiten Stellelement angeordnet sind.

Unter "Randbereich" oder "Endbereich" wird im Rahmen der vorliegenden Erfindung der Bereich eines Bauteils verstanden, der sich von dem jeweiligen freien Ende bis ca. 5cm in die dazu entgegengesetzte Richtung erstreckt.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block- oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparates) wie z. B. einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Die Erfindung wird im Folgenden anhand der Figuren an Ausführungsbeispielen näher erläutert. Es zeigen:

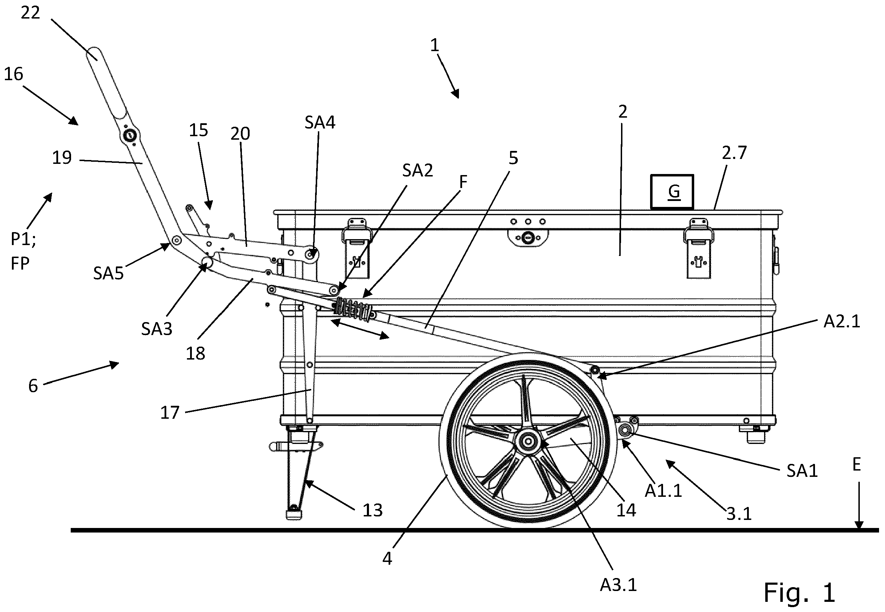

- Fig. 1: in vereinfachter Seitenansicht eine beispielhafte Ausführungsvariante eines erfindungsgemäßen Transportgerätes in einer Fahrposition;

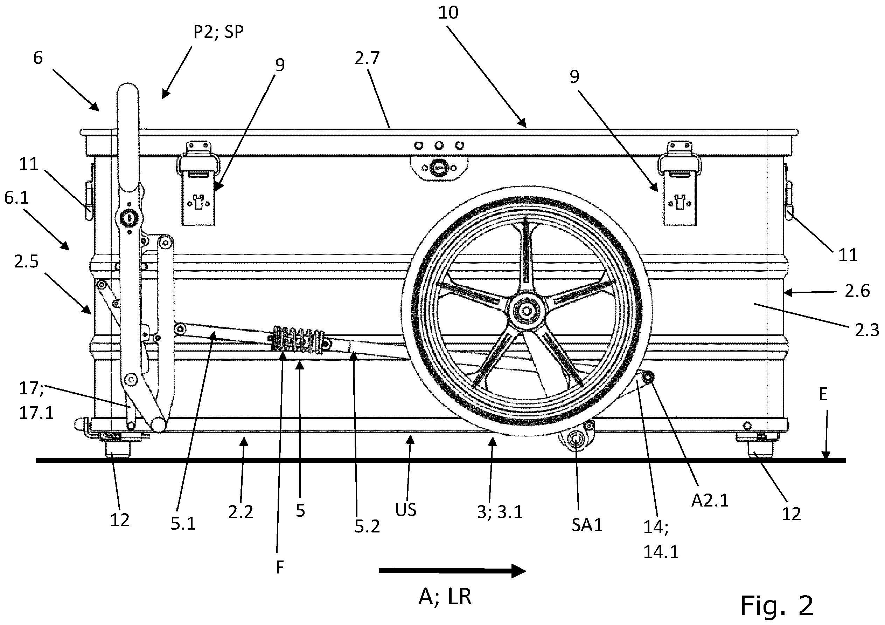

- Fig. 2: das in der Figur 1 gezeigte Transportgerät in einer Standposition;

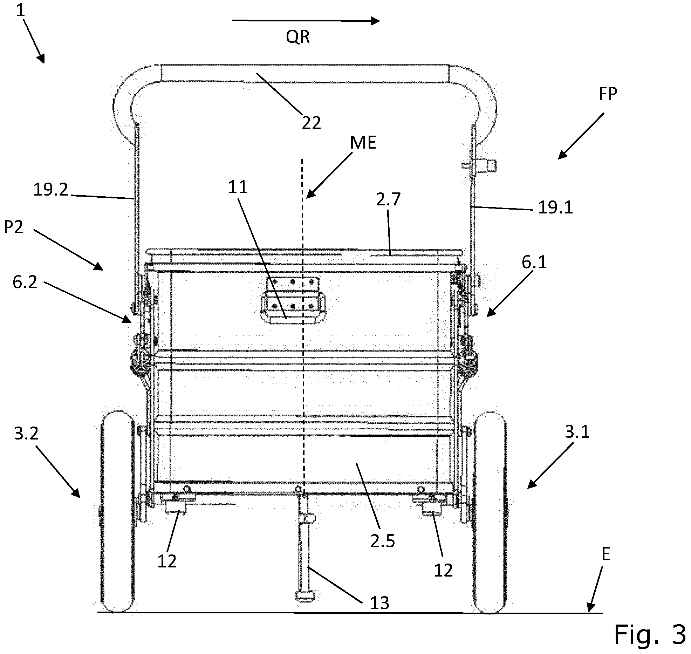

- Fig. 3: in vereinfachter Darstellung eine Rückansicht des Transportgerätes der Figur 1;

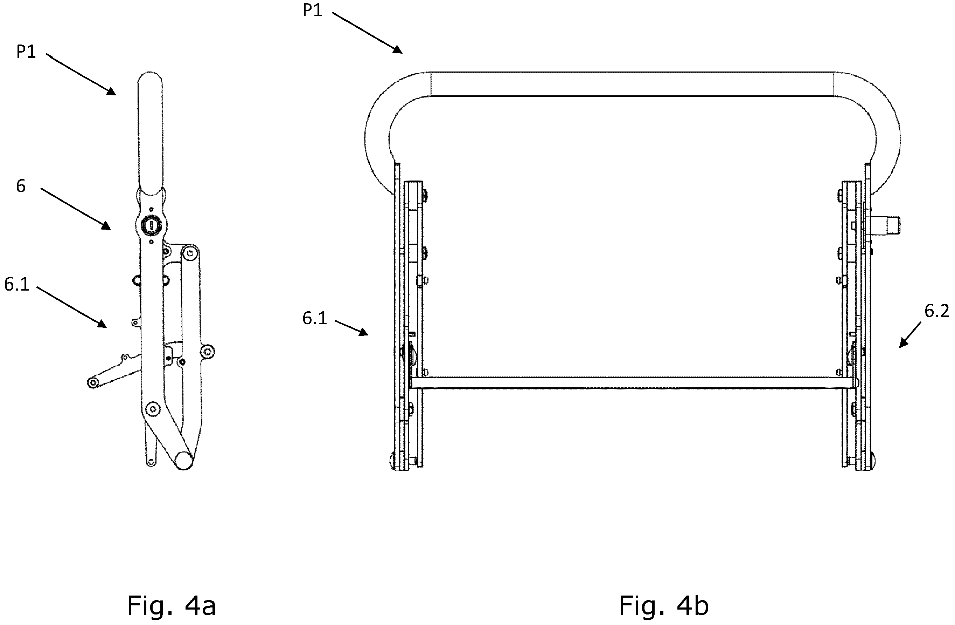

- Fig. 4a und 4b: eine vereinfachte Ansicht einer freigestellten Hebelmechanik des erfindungsgemäßen Transportgerätes in der ersten Position und

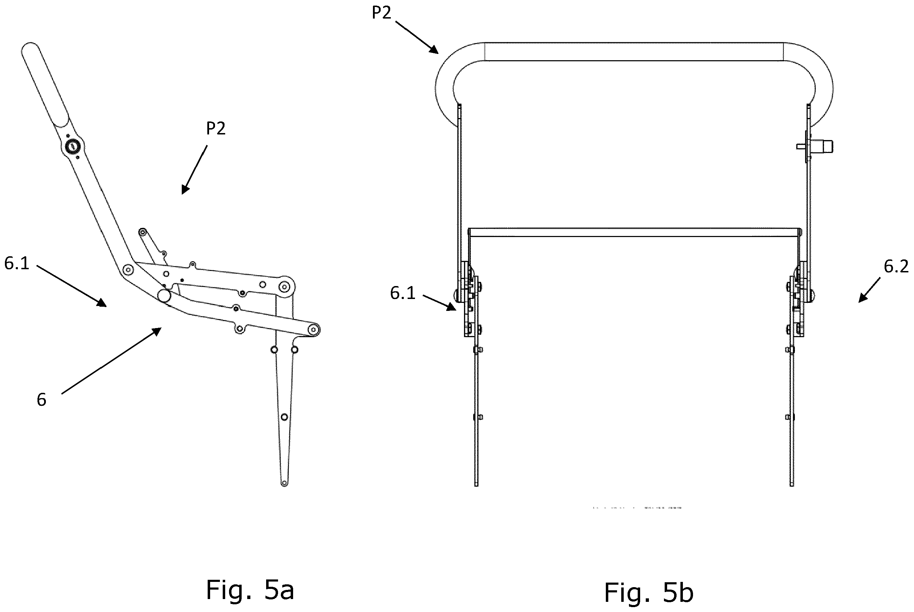

- Fig. 5a und 5b: eine vereinfachte Ansicht der freigestellten Hebelmechanik der Figuren 4a und b in einer zweiten Position.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind. Auch ist die Erfindung in den Figuren nur als schematische Ansicht zur Erläuterung der Arbeitsweise dargestellt. Insbesondere dienen die Darstellungen in den Figuren nur der Erläuterung des grundlegenden Prinzips der Erfindung. Aus Gründen der Übersichtlichkeit ist darauf verzichtet worden, alle Bestandteile der Vorrichtung zu zeigen.

Das in den Figuren allgemein mit 1 bezeichnete Transportgerät ist dabei zu Beförderung von Gegenständen G wie beispielsweise Dinge des täglichen Bedarfs, wie Lebensmittel, Sportartikel, Reisequipment, Werkzeug, Foto- bzw. Filmausrüstung oder Musikinstrumente geeignet. Dabei handelt es sich ausdrücklich lediglich um eine nicht abschließende, beispielshafte Aufzählung von möglichen Gegenständen G, die nicht abschließend zu verstehen ist. Vielmehr ist das erfindungsgemäße Transportgerät 1 auch zum Transport einer Vielzahl weiterer Gegenstände G verwendbar.

Hierbei umfasst das Transportgerät 1 zumindest einen Transportbehälter 2 zur Aufnahme der Gegenstände G. Der Transportbehälter 2 kann dabei gehäuseartig ausgebildet sein und einen Behälterboden 2.2 und mehrere umlaufend angeordnete Behälterseitenwände 2.3 - 2.6 aufweisen, die vom Behälterboden 2.2 vorzugsweise rechtwinklig abstehen und einen Behälterinnenraum umgeben bzw. definieren. Im Behälterinnenraum können dabei die Gegenstände G aufgenommen werden.

Mehr im Detail kann dabei vorgesehen sein, dass der Transportbehälter 2 durch vier Behälterseitenwände 2.3 - 2.6 umgeben ist, wobei jeweils zwei Behälterseitenwände als Längsseitenwände 2.3, 2.4 und die zwei weiteren Behälterseitenwände 2.5, 2.6 als Querseitenwände ausgebildet sind, so dass der Transportbehälter 2 eine im Wesentlichen rechteckförmige Grundform aufweist. Die Längsseitenwände 2.3, 2.4 erstrecken sich dabei entlang einer Längsrichtung LR und die Querseitenwände 2.5, 2.6 entlang einer Querrichtung QR, wobei die Längsrichtung LR mit einer Fahrrichtung A des Transportgerätes 1 zusammenfällt und die Querrichtung QR lotrecht zur Längsrichtung LR ausgerichtet ist. Insbesondere bildet dabei die Fahrrichtung A eine Schubrichtung sowie eine der Fahrrichtung A entgegengesetzte Fahrrichtung eine Zugrichtung für das Transportgerät 1 aus. Beide Fahrrichtungen sind dabei mit dem Transportgerät 1 möglich.

Insbesondere bildet dabei in einer Fahrrichtung A des Transportgerätes 1 gesehen die als Querseitenwand ausgebildete Behälterseitenwand 2.5 eine Rückwand und die als Querseitenwand ausgebildete Behälterseitenwand 2.6 eine Vorderwand des Transportbehälters 2 aus. Ferner bildet die als Längsseitenwand ausgebildete Behälterseitenwand 2.3 eine in Fahrrichtung A des Transportgerätes 1 gesehene rechte Behälterseitenwand und die als Längsseitenwand ausgebildete Behälterseitenwand 2.4 eine linke Behälterseitenwand.

Dabei kann der Transportbehälter 2 wasserdicht oder spritzwassergeschützt ausgebildet sein, und in einer bevorzugten Ausführungsvariante einen zu öffnenden Deckel 2.7 aufweisen, der an dem durch den Behälterboden 2.2 und die Behälterseitenwände 2.3 - 2.6 gebildeten Grundelement des Transportbehälters 2 klappbar angeordnet ist. Vorzugsweise ist der Deckel 2.7 mittels nicht nähergehend dargestellten Scharnieren an einer der Behälterseitenwände 2.3 - 2.6 mit dem Transportbehälter 2 verbunden, so dass der Deckel 2.7 auf- und zugeklappt werden kann und dadurch der Gehäuseinnenraum des Transportbehälters 2 zugänglich wird.

Zur wasserdichten oder spritzwassergeschützten Anordnung des Deckels 2.7 auf dem Grundelement des Transportbehälters 2 weist der Deckel 2.7 und/oder das Grundelement eine Dichtung, insbesondere eine montierte Formdichtung auf, die beim Befestigen des Deckels 2.7 auf dem Grundelement derart angedrückt wird, dass die durch die freien Enden der Behälterseitenwände 2.3 - 2.6 definierte Gehäuseöffnung des Transportbehälters 2 wasserdicht oder zumindest spritzwassergeschützt verschlossen wird.

Vorzugsweise kann auch am freiendseitigen Randbereich der Behälterseitenwände 2.3 - 2.6 ein umlaufender Falz vorgesehen, der von einer am Deckel 2.7 angeordneten Dichtung außenumfangsseitig umschlossen wird. Durch die durch den Falz gebildete, vom Randbereich der Behälterseitenwände 2.3 - 2.6 abstehende Überhöhung wird das Eindringen von Wasser in den Gehäuseinnenraum des Transportbehälters 2 zusätzlich zur Dichtung wirksam verhindert.

Der Deckel 2.7 kann dabei über zumindest eine Absperreinrichtung 9, vorzugsweise über zwei zueinander beabstandet vorgesehene Absperreinrichtungen 9, mit dem Transportbehälter 2 absperrbar vorgesehen sein. Vorzugsweise können die Absperreinrichtungen 9 als Spannhebelverschlüsse ausgebildet sein.

Der Deckel 2.7 kann weiterhin als Tisch und/oder Sitzfläche für zumindest zwei Personen ausgebildet sein. Hierfür kann beispielsweise auf dem Deckel 2.7 eine gepolsterte Sitzauflage 10 vorgesehen sein. Zudem kann der Deckel 2.7 auf Grund seiner Formstabilität als weitere Ladefläche des Transportbehälters 2 genutzt werden.

Der Transportbehälter 2 kann dabei aus einem korrosionsbeständigen und/oder formstabilen Material, insbesondere Aluminium, verzinktem Blech oder einem Polymer, hergestellt sein. Somit wird einer wetterfester Transportbehälter 2 geschaffen. Zur weiteren Erhöhung der Formstabilität des Transportbehälters 2 kann dieser eine strukturierte Oberfläche zumindest in einem Teilabschnitt einer der Behälterseitenwände 2.3 - 2.6 aufweisen.

Ferner kann an dem Transportbehälter 2 an einer der Behälterseitenwände 2.3 - 2.6 zumindest ein klappbarer Tragegriff 11 vorgesehen, insbesondere angeordnet sein. Bevorzugt sind dabei zumindest zwei klappbare Tragegriffe 11 vorgesehen, wobei der erste Tragegriff 11 an der als Rückwand ausgebildeten Behälterseitenwand 2.5 und der zweite Tragegriff 11 an der als Vorderwand ausgebildeten Behälterseitenwand 2.6 angeordnet sein kann. Die Tragegriffe 11 sind dabei auch zur Anordnung bzw. Aufnahme von Spanngurten zur Befestigung von Gegenstanden G auf dem Deckel 2.7 ausgebildet.

Das Innenvolumen des Transportbehälters 2 kann zwischen 100l und 150l, vorzugsweise näherungsweise 135l bei einer Traglast von in etwa 60kg betragen.

An einer Unterseite US des Behälterbodens 2.2, also auf der Ebene E zugewandten Seite des Behälterbodens 2.2, kann dabei zumindest ein den Transportbehälter 2 abstützender Standfuß 12 vorgesehen sein. Vorzugsweise sind dabei mehrere, vorzugsweise vier Standfüße 12 an der Unterseite US des Behälterbodens 2.2 angeordnet. Besonders vorteilhaft sind die Standfüße 12 jeweils in einem Eckbereich des Behälterbodens 2.2 vorgesehen. Vorzugsweise sind die Standfüße 12 als Gummifüße ausgebildet, mittels denen das Transportgerät 1 in einer Standposition SP auf einer Ebene E zur Auflage gelangt.

Ferner kann an der Unterseite US des Behälterbodens 2.2 zumindest ein weiterer Standfuß 13 vorgesehen, insbesondere angeordnet sein. Dieser weitere Standfuß 13 ist dabei vorteilhaft im Bereich der als Rückwand ausgebildeten Behälterseitenwand 2.5 an der Unterseite US des Behälterbodens 2.2 vorgesehen und dazu ausgebildet, sich in einer Fahrposition FP des Trasportgerätes 1 auf der Ebene E abzustützen. Insbesondere kann der weitere Standfuß 13 klappbar an der Unterseite US des Behälterbodens 2.2 des Transportbehälters 2 angeordnet sein. Ferner kann das Transportgerät 1 auch einen Bodenanker aufweisen.

Zudem ist an dem Transportbehälter 2 des Transportgerätes 1 ein zwischen einer Fahrposition FP und einer Standposition SP um eine erste Schwenkachse SA1 verschwenkbar angeordnetes Fahrwerk 3 mit wenigstens zwei Laufrädern 4 vorgesehen. Dabei ist das Transportgerät 1 zumindest in der Fahrposition FP des Fahrwerks 3 auf der Ebene E mittels der Laufräder 4 fahrbar abgestützt, während das Transportgerät 1 in der Standposition SP des Fahrwerks 3 auf der Ebene E zumindest abschnittweise aufliegt. Vorzugsweise liegt das Transportgerät 1 in der Standposition SP des Fahrwerks 3 mit dem Transportbehälter 2 auf der Ebene E zumindest abschnittsweise auf.

Mehr im Detail weist das Fahrwerk 3 dabei einen in Fahrrichtung A gesehenen rechten Fahrwerksteil 3.1 und einen linken Fahrwerkteil 3.2 auf. Die Fahrwerksteile 3.1 und 3.2 sind dabei spiegelsymmetrisch, jedoch ansonsten identisch zueinander ausgebildet. Werden in der nachfolgenden Beschreibung Teile mit einem Punkt 1 (".1") abgekürzt, so beziehen sich diese Erläuterungen, Teile, Baugruppen, oder Elemente auf den rechten Fahrwerksteil 3.1, während mit einem Punkt 2 (".2") abgekürzte Erläuterungen, Teile, Baugruppen oder Elemente sich auf den linken Fahrwerkteil 3.2 beziehen. Da jedoch das Fahrwerk 3 insbesondere spiegelsymmetrisch zu einer Mittelebene ME des Transportgerätes 1, jedoch ansonsten identisch ausgebildet ist, gelten im Zusammenhang lediglich eines Fahrwerkteils 3.1 oder 3.2 getroffene Ausführungen auch für den jeweils anderen Fahrwerkteil 3.1, 3.2 "Mutatis Mutandis". Die Mittelebene ME des Transportgerätes 1 verläuft dabei senkrecht zu der Ebene E.

Dabei weist das Fahrwerk 3 einen rechten und linken Schwenkhebel 14.1 und 14.2 auf, über den der entsprechende rechte und linke Fahrwerksteil 3.1, 3.2 mit der Unterseite US des Transportbehälters 2 verbunden ist. Mehr im Detail ist an dem jeweiligen Schwenkhebel 14.1 und 14.2 die erste Schwenkachse SA1 ausgebildet, über der der jeweilige Schwenkhebel 14.1 und 14.2 um die erste Schwenkachse SA1 drehbar gelenkig an der Unterseite US des Transportbehälters 2 angelenkt ist.

Der rechte und linke Schwenkhebel 14.1, 14.2 kann dabei im Wesentlichen Y-förmig ausgebildet sein und dabei in seinen jeweiligen freien Randbereichen der entsprechenden Längserstreckung der Y-Form einen Anlenkungsabschnitt A1.1, A2.1, A3.1 bzw. A1.2, A2.2, A3.2 aufweisen.

Mehr im Detail weist der linke Schwenkhebel 14.1 dabei einen ersten Anlenkungsabschnitt A1.1, einen zweiten Anlenkungsabschnitt A2.1 und einen dritten Anlenkungsabschnitt A3.1 auf, während der rechte Schwenkhebel 14.2 einen ersten Anlenkungsabschnitt A1.2, einen zweiten Anlenkungsabschnitt A2.2 sowie einen dritten Anlenkungsabschnitt A3.2 aufweist.

Die erste Schwenkachse SA1 ist dabei drehbar an dem jeweiligen ersten Anlenkungsabschnitt A1.1 und A1.2 des entsprechenden Schwenkhebels 14.1 und 14.2 aufgenommen, während an dem jeweiligen zweiten Anlenkungsabschnitt A2.1, A2.2 jeweils ein Stellhebel 5 drehbar angebunden ist. Über den jeweiligen Stellhebel 5 ist dabei das Fahrwerk 3 mit einer um zumindest ein zweite Schwenkachse SA2 schenkbaren Hebelmechanik 6 zwangskoppelt.

Ferner sind an dem jeweiligen dritten Anlenkungsabschnitt A3.1, A3.2 des entsprechenden Schwenkhebels 14.1, 14.2 die wenigstens zwei Laufräder 4 des Fahrwerks 3 um eine jeweilige Drehachse DA drehbar gelagert aufgenommen. Insbesondere können die Laufräder 4 hierbei mittels eines Lagers, vorzugsweise eines Kugellagers bzw. eines Radlagers, an dem jeweiligen dritten Anlenkungsabschnitt A3.1, A3.2 drehbar angeordnet sein. Dabei kann es sich bei dem Kugellagern für die Laufräder 4 vorzugsweise auch um Edelstahradlager handeln.

Vorzugsweise sind die Laufräder 4 an dem jeweiligen dritten Anlenkungsabschnitt A3.1, A3.2 zu dem ersten Anlenkungsabschnitt A1.1, A1.2 in Fahrrichtung A beabstandet vorgesehen, und zwar derart, dass die Drehachsen DA der Laufräder 4 in der Fahrposition FP des Fahrwerks 3 mittig oder näherungsweise mittig zwischen der als Rückwand ausgebildeten Behälterseitenwand 2.5 und der als Vorderwand ausgebildeten Seitenwand 2.6 vorgesehen sind.

Insbesondere ist über den jeweiligen Schwenkhebel 14.1, 14.2 eine Einzelradaufhängung für die Laufräder 4 des Fahrwerks 3 ausgebildet.

Die Laufräder 4 können dabei eine Luftbereifung oder pannensichere PU-Reifen aufweisen. Insbesondere können die Laufräder 4 damit spurfrei ausgebildet sein.

Ferner kann das Fahrwerk 3 mittels des zumindest einen Stellhebels 5 eine Federung F für die Laufräder 4 ausbilden. Mehr im Detail kann die Federung F als Einzelradfederung ausgebildet sein. Hierfür ist der jeweilige Stellhebel 5 der rechten und/oder linken Fahrwerksseite 3.1, 3.2 insbesondere zweiteilig ausgebildet und weist jeweils ein erstes mit der Hebelmechanik 6 zwangsgekoppeltes Stellhebelelement 5.1 sowie ein zu dem ersten Stellhebelelement 5.1 entlang der Längsstreckung des Stellhebels 5 verschiebbar ausgebildetes zweiten Stellhebelelement 5.2 auf, das unter einer Federspannung verschiebbar an dem ersten Stellhebelelement 5.1 angebunden ist. Die Verschiebbarkeit des zweiten Stellhebelelementes 5.2 ist mittels eine Doppelpfeils kenntlich gemacht. Die Federung F kann als Federelement eine unter einer Vorspannung zwischen dem ersten Stellhebelelement 5.1 und dem zweiten Stellhebelelement 5.2 eingespannte Druckfeder aufweisen, wobei die Vorspannung einstellbar, also veränderbar ausgebildet sein kann.

Zur Einleitung der Schwenkbewegung ist dabei das zwischen der Fahrposition FP und der Standposition SP verschwenkbare Fahrwerk 3 über den zumindest einen Stellhebel 5 mit der um die zumindest eine zweite Schwenkachse SA2 schwenkbaren Hebelmechanik 6 zwangsgekoppelt, die ihrerseits wiederum zwischen einer ersten Position P1 und einer zweiten Position P2 um die zumindest eine zweite Schwenkachse SA2 derart schwenkbar ausgebildet ist, dass die Hebelmechanik 6 in der ersten Position P1 das Fahrwerk 3 in die Standposition SP und in der zweiten Position P2 in die Fahrposition FP jeweils lagefixiert verschwenkt.

Die Hebelmechanik 6 kann dabei eine Deichsel 16 für das Transportgerät 1 ausbilden. Hierfür kann die Deichsel 16 ein Griffelement 22 aufweisen, an dem das Transportgerät 1 bewegt, insbesondere geschoben und/oder gezogen, werden kann. Das Griffelement 22 kann dabei einen rechten Hebelmechanikteil 6.1 mit einem linken Hebelmechanikteil 6.2 verbinden. Auch kann an der Deichsel 16 eine nicht nähergehend dargestellte Anhängevorrichtung zum lösbaren Anhängen der Transportvorrichtung 1 an einem Zweirad, insbesondere einem Fahrrad, vorgesehen sein.

Analog dem Fahrwerk 3 weist auch die Hebelmechanik 6 einen in Fahrrichtung A gesehenen rechten Hebelmechanikteil 6.1 und einen linken Hebelmechanikteil 6.2 auf. Die Hebelmechanikteile 6.1, 6.2 sind dabei spiegelsymmetrisch, jedoch ansonsten identisch zueinander ausgebildet. Werden in der nachfolgenden Beschreibung Teile mit einem Punkt 1 (".1") abgekürzt, so beziehen sich diese Erläuterungen, Teile, Baugruppen, oder Elemente auf den rechten Hebelmechanikteil 6.1, während mit einem Punkt 2 (".2") abgekürzte Erläuterungen, Teile, Baugruppen oder Elemente sich auf den linken Hebelmechanikteil 6.2 beziehen. Da jedoch die Hebelmechanik 6 insbesondere spiegelsymmetrisch zu einer Mittelebene ME des Transportgerätes, jedoch ansonsten identisch ausgebildet ist, gelten im Zusammenhang lediglich eines Hebelmechanikteils 6.1 oder 6.2 getroffene Ausführungen auch für den jeweils anderen Hebelmechanikteil 6.1, 6.2 "Mutatis Mutandis".

Hierbei kann vorgesehen sein, dass die Hebelmechanik 6 ein an dem Transportbehälter 2 fest angeordnetes Befestigungselement 17 aufweist, das sich im Wesentlichen in seiner Längserstreckung lotrecht zu der Unterseite US des Transportbehälters 2 erstreckt. Insbesondere ist das Befestigungselement 17 an zumindest einer der als Längsseitenwände ausgebildeten Behälterseitenwände 2.3, 2.4 angeordnet.

Mehr im Detail weist der rechte Hebelmechanikteil 6.1 ein rechtes Befestigungselement 17.1 und der linke Hebelmechanikteil 6.2 ein linkes Befestigungselement 17.2 auf. Insbesondere ist das Befestigungselement 17 orstfest an dem Transportbehälter 2 angeordnet, beispielsweise an dem Transportbehälter 2 angenietet.

An dem rechten Befestigungselement 17.1 ist dabei ein erstes Stellelement 18.1 mit einem ersten Endbereich um die zweite Schwenkachse SA2 drehbar angelenkt angeordnet, wobei an dem ersten Stellelement 18.1 zudem der Stellhebel 5 gelenkig vorgesehen ist. Ferner ist an dem ersten Stellelement 18.1 an dem der zweiten Schwenkachse SA2 gegenüberliegenden zweiten Endbereich eine dritte Schwenkachse SA3 ausgebildet, an der ein zweites Stellelement 19.1 um die dritte Schwenkachse SA3 drehbar angeordnet ist.

Überdies ist oberhalb, also in Richtung des Deckels 2.7 versetzt, des ersten Stellelementes 18.1 ein drittes Stellelement 20.1 an dem Befestigungselement 17.1 um eine vierte Schwenkachse SA4 drehbar mit einem ersten Bereich angeordnet, während der dem ersten Endbereich gegenüberliegende zweite Endbereich um eine fünfte Schwenkachse SA5 drehbar an dem zweiten Stellelement 19.1 angeordnet ist. Das erste Stellelement 18.1 und dritte Stellelement 20.1 sind dabei untereinander parallelogrammförmig an dem Befestigungselement 17.1 bzw. dem zweiten Stellelement 19.1 angeordnet. Damit ist die Hebelmechanik 6 zwischen der ersten Position P1 als eingeklappte Position und der zweiten Position P2 als ausgeklappte Position in sich klappbar bzw. zusammenklappbar ausgebildet.

Mehr im Detail ist die Hebelmechanik 6 um die zweite bis fünfte Schwenkachse SA2...SA5 zwischen einer eingeklappten Position P1 und einer ausgeklappten Position P2 derart verschwenkbar ist, dass die Hebelmechanik 6 in der eingeklappten Position P1 das Fahrwerk 3 in die Standposition SP und in der ausgeklappten Position P2 in der Fahrposition FP hält.

Hierfür kann die Hebelmechanik 6 zumindest eine Sperreinrichtung 15 aufweisen, mittels der die Hebelmechanik 6 in der ersten Position P1 und/oder der zweiten Position P2 sperrbar ist und somit das Fahrwerk 3 in der Standposition SP und der Fahrposition FP lagefixiert gehalten ist. Die Sperreinichtung 15 kann als schwenkbarer Haken ausgebildet sein, der in der erste Position P1 in die dritte Schwenkachse SA3 einhakt und in der zweiten Position P2 in die fünfte Schwenkachse SA5.

Überdies können mehrere Transportgeräte 1 in ihrer jeweiligen Standposition SP übereinander stapelbar ausgebildet sein.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- 1: Transportgerät
- 2: Transportbehälter
- 2.2: Behälterboden
- 2.3-2.6: Behälterseitenwand
- 2.7: Deckel
- 3: Fahrwerk
- 4: Laufräder
- 5: Stellhebel
- 6: Hebelmechanik
- 9: Absperreinrichtung
- 10: Sitzauflage
- 11: Tragegriff
- 12: Standfuß
- 13: Standfuß

- 9: Absperreinrichtung
- 11: Tragegriff
- 12: Standfuß
- 14: Schwenkhebel
- 16: Deichsel
- 17: Befestigungselement
- 18...20: Stellelement
- 22: Griffelement

- A: Fahrrichtung
- A1...A3: Anlenkungsabschnitt
- E: Ebene
- SA1...SA5: Schwenkachse
- SA2: zweite Schenkachse
- P1: erste Position
- P2: zweite Position
- G: Gegenständen
- LR: Längsrichtung
- QR: Querrichtung

## Patentansprüche

1. Transportgerät (1) zur Beförderung von Gegenständen (G), umfassend zumindest einen Transportbehälter (2) zur Aufnahme der Gegenstände (G), ein an dem Transportbehälter (2) zwischen einer Fahrposition (FP) und einer Standposition (SP) um eine erste Schwenkachse (SA1) verschwenkbar angeordnetes Fahrwerk (3) mit wenigstens zwei Laufrädern (4), wobei das Transportgerät (1) zumindest in der Fahrposition (FP) des Fahrwerks (3) auf einer Ebene (E) mittels der Laufräder (4) fahrbar abgestützt ist, während das Transportgerät (1) in der Standposition (SP) des Fahrwerks (3) auf der Ebene (E) zumindest abschnittweise aufliegt, wobei das verschwenkbare Fahrwerk (3) zur Einleitung der Schwenkbewegung um die erste Schwenkachse (SA1) über zumindest einen Stellhebel (5) mit einer um zumindest eine zweite Schwenkachse (SA2) schwenkbaren Hebelmechanik (6) zwangsgekoppelt ist, die zwischen einer ersten Position (P1) und einer zweiten Position (P2) um die zumindest eine zweite Schwenkachse (SA2) derart schwenkbar ausgebildet ist, dass die Hebelmechanik (6) in der ersten Position (P1) das Fahrwerk (3) in die Standposition (SP) und in der zweiten Position (P2) in die Fahrposition (FP) jeweils lagefixiert verschwenkt.

2. Transportgerät (1) nach Anspruch 1, **dadurch gekennzeichnet, dass** der Transportbehälter (2) gehäuseartig ausgebildet ist und einen Behälterboden (2.2), mehrere umlaufend angeordnete Behälterseitenwände (2.3 - 2.6) und einen Deckel (2.7) aufweist.

3. Transportgerät (1) nach Anspruch 1 oder 2, **dadurch gekennzeichnet, dass** der Transportbehälter (2) wasserdicht oder spritzwassergeschützt ausgebildet ist und/oder der Transportbehälter (2) aus einem korrosionsbeständigen und/oder formstabilen Material, insbesondere Aluminium, verzinktem Blech oder einem Polymer, hergestellt ist.

4. Transportgerät (1) nach einem der vorangehenden Ansprüche, **dadurch gekennzeichnet, dass** an einer Unterseite (US) des Behälterbodens (2.2) zumindest ein den Transportbehälter (2) abstützender Standfuß (12) und/oder ein weiterer, klappbarer Standfuß (13) vorgesehen sind.

5. Transportgerät (1) nach einem der vorangehenden Ansprüche, **dadurch gekennzeichnet, dass** das Fahrwerk (3) zumindest einen Schwenkhebel (14, 14.1, 14.2) aufweist, der im Wesentlichen Y-förmig ausgebildet ist und in seinen jeweiligen freien Randbereichen der entsprechenden Längserstreckung der Y-Form einen Anlenkungsabschnitt (A1.1, A2.1, A3.1 bzw. A1.2, A2.2, A3.2) aufweist.

6. Transportgerät (1) nach einem der vorangehenden Ansprüche, **dadurch gekennzeichnet, dass** die erste Schwenkachse (SA1) drehbar an dem jeweiligen ersten Anlenkungsabschnitt (A1.1 und A1.2) des entsprechenden Schwenkhebels (14, 14.1, 14.2) aufgenommen ist, während an dem jeweiligen zweiten Anlenkungsabschnitt (A2.1, A2.2) jeweils ein Stellhebel (5) drehbar angebunden ist.

7. Transportgerät (1) nach einem der vorangehenden Ansprüche, **dadurch gekennzeichnet, dass** an dem jeweiligen dritten Anlenkungsabschnitt (A3.1, A3.2) des entsprechenden Schwenkhebels (14, 14.1, 14.2) die wenigstens zwei Laufräder (4) des Fahrwerks (3) um eine jeweilige Drehachse (DA) drehbar gelagert aufgenommen sind.

8. Transportgerät (1) nach einem der vorangehenden Ansprüche, **dadurch gekennzeichnet, dass** die Laufräder (4) an dem jeweiligen dritten Anlenkungsabschnitt (A3.1, A3.2) zu dem ersten Anlenkungsabschnitt (A1.1, A1.2) beabstandet vorgesehen sind, und zwar derart, dass die Drehachsen (DA) der Laufräder (4) in der Fahrposition (FP) des Fahrwerks (3) mittig oder näherungsweise mittig zwischen der als Rückwand ausgebildeten Behälterseitenwand (2.5) und der als Vorderwand ausgebildeten Seitenwand (2.6) vorgesehen sind.

9. Transportgerät (1) nach einem der vorangehenden Ansprüche, **dadurch gekennzeichnet, dass** über den jeweiligen Schwenkhebel (14, 14.1, 14.2) eine Einzelradaufhängung für die Laufräder (4) des Fahrwerks (3) ausgebildet ist.

10. Transportgerät (1) nach einem der vorangehenden Ansprüche, **dadurch gekennzeichnet, dass** das Fahrwerk (3) mittels des zumindest einen Stellhebels (5) eine Federung (F) für die Laufräder (4) ausbildet, indem der Stellhebel (5) zweiteilig ausgebildet ist und jeweils ein erstes mit der Hebelmechanik (6) zwangsgekoppeltes Stellhebelelement (5.1) sowie ein zu dem ersten Stellhebelelement (5.1) entlang der Längsstreckung des Stellhebels (5) verschiebbar ausgebildetes zweiten Stellhebelelement (5.2) aufweist, das unter einer Federspannung verschiebbar an dem ersten Stellhebelelement (5.1) angebunden ist.

11. Transportgerät (1) nach einem der vorangehenden Ansprüche, **dadurch gekennzeichnet, dass** die Hebelmechanik (6) eine Deichsel (16) für das Transportgerät (1) ausbildet, die ein Griffelement (22) aufweist, an dem das Transportgerät (1) bewegt, insbesondere geschoben und/oder gezogen, werden kann.

12. Transportgerät (1) nach einem der vorangehenden Ansprüche, **dadurch gekennzeichnet, dass** das Fahrwerk (3) und/oder die Hebelmechanik (6) spiegelsymmetrisch zu einer Mittelebene (ME) ausgebildet sind und jeweils einen rechten Fahrwerkteil (3.1) bzw. Hebelmechanikteil (6.1) und/oder einen linken Fahrwerkteil (3.2) bzw. Hebelmechanikteil (6.2) aufweisen.

13. Transportgerät (1) nach einem der vorangehenden Ansprüche, **dadurch gekennzeichnet, dass** die Hebelmechanik (6) zumindest ein an dem Transportbehälter (2) fest angeordnetes Befestigungselement (17, 17.1, 17.2), ein erstes Stellelement (18, 18.1, 18.2), ein zweites Stellelement (19, 19.1, 19.2), sowie ein drittes Stellelement (20, 20.1, 20.2) aufweist, wobei an dem Befestigungselement (17, 17.1, 17.2) das erste Stellelement (18, 18.1, 18.2) mit einem ersten Endbereich um die zweite Schwenkachse (SA2) drehbar angelenkt angeordnet ist, wobei an dem ersten Stellelement (18, 18.1, 18.2) zudem der Stellhebel (5) gelenkig vorgesehen ist und an dem ersten Stellelement (18, 18.1, 18.2) an dem der zweiten Schwenkachse (SA2) gegenüberliegenden zweiten Endbereich eine dritte Schwenkachse (SA3) ausgebildet ist, an der das zweite Stellelement (19, 19.1, 19.2) um eine dritte Schwenkachse (SA3) drehbar angeordnet ist.

14. Transportgerät (1) nach einem der vorangehenden Ansprüche, **dadurch gekennzeichnet, dass** oberhalb des ersten Stellelementes (18, 18.1, 18.2) und zu diesem beabstandet das dritte Stellelement (20, 20.1, 20.2) an dem Befestigungselement (17, 17.1, 17.2) um eine vierte Schwenkachse (SA4) drehbar mit einem ersten Bereich angeordnet ist, während der dem ersten Endbereich gegenüberliegende zweite Endbereich um eine fünfte Schwenkachse (SA5) drehbar an dem zweiten Stellelement (19, 19.1, 19.2) angeordnet ist.

15. Transportgerät (1) nach einem der vorangehenden Ansprüche, **dadurch gekennzeichnet, dass** das erste Stellelement (18, 18.1, 18.2) und dritte Stellelement (20, 20.1, 20.2) untereinander parallelogrammförmig an dem Befestigungselement (17, 17.1, 17.2) bzw. dem zweiten Stellelement (19, 19.1, 19.2) angeordnet sind.
